# EUROPÄISCHE PATENTSCHRIFT

(11) **EP 2 011 210 B1**
(45) Veröffentlichungstag und Bekanntmachung des Hinweises auf die Patenterteilung: **26.06.2019**
(21) Anmeldenummer: 07727211.0
(22) Anmeldetag: 22.03.2007
(51) Int. Cl.: H05B 6/12, H02J 50/10, H02J 50/40, H02J 50/90

(54) **GERÄT ZUR INDUKTIVEN ENERGIEÜBERTRAGUNG MIT FLUSSMESSUNG**
DEVICE FOR INDUCTIVE ENERGY TRANSMISSION WITH FLUX MEASUREMENT
APPAREIL DE TRANSMISSION INDUCTIVE D'ÉNERGIE AVEC MESURE DU FLUX

(30) Priorität: 18.04.2006 DE 102006017800
(43) Veröffentlichungstag der Anmeldung: 07.01.2009
(73) Patentinhaber: BSH Hausgeräte GmbH, 81739 München (DE)
(72) Erfinder: DRECHSLER, Eberhard, 91277 Dresden (DE); KOMMA, Thomas, 85521 Ottobrunn (DE)
(86) Internationale Anmeldenummer: PCT/EP2007/052735
(87) Internationale Veröffentlichungsnummer: WO 2007/122049

(56) Entgegenhaltungen:
- EP-A- 1 492 386
- WO-A-02/37641
- US-A1- 2002 141 208

## Beschreibung

Die Erfindung geht aus von einer Energieübertragungseinheit nach dem Oberbegriff des Anspruchs 1.

Es ist eine Energieübertragungseinheit bekannt, die zur schnurlosen Versorgung von E-lektrogeräten mit elektrischer Energie dient. Diese kann beispielsweise im Küchenbereich unterhalb einer Arbeitsplatte integriert werden und mittels eines induktiven Übertragens ein auf der Arbeitsplatte aufgelegtes Elektrogerät versorgen. Hierzu weist die Energieübertragungseinheit eine Primärwicklung auf, mittels der eine Spannung in einer geräteseitigen Sekundärwicklung induziert wird. Diese Spannung wird als Betriebsspannung des Geräts genutzt. Außerdem wird die Betriebsspannung geräteseitig erfasst und an ein Empfangselement der Energieübertragungseinheit übertragen.

Die Aufgabe der Erfindung besteht insbesondere darin, die gattungsgemäßen Energieübertragungseinheiten weiterzuentwickeln, und zwar insbesondere hinsichtlich einer Reduzierung von Herstellungskosten.

Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

Die Erfindung geht aus von einer Energieübertragungseinheit umfassend eine Primäreinheit, die ein Felderzeugungsmittel aufweist, das zur Übertragung einer Energie an ein Feldempfangsmittel einer Sekundäreinheit mittels eines Übertragungsfeldflusses vorgesehen ist, und ein Erfassungsmittel zur Erfassung einer Sekundärspannungskenngröße.

Es wird vorgeschlagen, dass das Erfassungsmittel zur Erfassung der Sekundärspannungskenngröße mittels eines mit zumindest dem Erfassungsmittel und dem Feldempfangsmittel verketteten Erfassungsfeldflusses vorgesehen ist. Dadurch können besonders kostengünstige, gängige Erfassungsmittel zur Erfassung der Sekundärspannungskenngröße eingesetzt werden. Das Felderzeugungsmittel weist vorzugsweise einen Übertragungsbereich auf. Dabei kann die Sekundäreinheit zu einem Zusammenwirken mit der Primäreinheit in dem Übertragungsbereich angeordnet werden. Außerdem ist die Sekundäreinheit vorteilhafterweise vom Übertragungsbereich trennbar. Die Sekundäreinheit kann als Spannungsversorgungseinheit zur Versorgung eines elektrischen Verbrauchers, wie z.B. eines Elektrogeräts, ausgebildet sein. Dabei kann die Sekundäreinheit in einem elektrischen Verbraucher integriert werden. Der elektrische Verbraucher kann als ein Elektrogerät, insbesondere im Haushaltsbereich, ausgebildet sein. Außerdem kann die Sekundäreinheit selbst als elektrischer Verbraucher ausgebildet sein. Die Energieübertragungseinheit kann vorzugsweise unterhalb einer Fläche montiert werden, wie z.B. einer Arbeitsplatte im Küchenbereich oder einer Arbeitsfläche in einem Werk, wobei die Sekundäreinheit zu einem Zusammenwirken mit der Primäreinheit an die Fläche angeordnet werden kann. Die Energieübertragungseinheit kann außerdem in einen Induktionsherd integriert werden, wobei die Sekundäreinheit z.B. als Kochgeschirr ausgebildet ist. Ferner kann die Energieübertragungseinheit zu einer Anwendung in einem Kraftfahrzeug vorgesehen sein. Unter einer "Sekundärspannungskenngröße" soll insbesondere eine Kenngröße verstanden werden, die dazu dient, eine durch den Übertragungsfeldfluss in der Sekundäreinheit erzeugte Sekundärspannung zumindest zu berücksichtigen. Beispielsweise kann die Sekundärspannungskenngröße zu einer Steuerung der Primäreinheit und/oder zu einer Ausgabe der Sekundärspannung an einen Bediener oder an eine Recheneinheit ausgewertet werden. Ferner soll unter einem "Übertragungsfeldfluss" insbesondere ein Fluss eines vom Felderzeugungsmittel erzeugten magnetischen und/oder elektrischen Übertragungsfelds verstanden werden. Unter einem "Übertragungsbereich" des Felderzeugungsmittels kann eine Reichweite der vom Felderzeugungsmittel durch eine Felderzeugung getriebenen Energieübertragung verstanden werden. Insbesondere kann darunter ein Bereich verstanden werden, innerhalb dessen die Sekundäreinheit vorzugsweise mindestens 70%, vorteilhaft wenigstens 90% und besonders vorteilhaft zumindest 95% der durch das Felderzeugungsmittel zur Verfügung gestellten Energie empfangen kann.

Eine konstruktiv einfache Ausgestaltung der Energieübertragungseinheit kann außerdem erreicht werden, wenn der Erfassungsfeldfluss der Übertragungsfeldfluss ist.

Vorteilhafterweise ist das Erfassungsmittel in der Primäreinheit angeordnet. Es kann dadurch auf ein Erfassungsmittel zur Erfassung der Sekundärspannungskenngröße in der Sekundäreinheit sowie auf ein Übertragungselement zum Rückkoppeln der Sekundärspannungskenngröße an die Energieübertragungseinheit verzichtet werden, wodurch weitere Kosten eingespart werden können. Ist das Erfassungsmittel von der Primäreinheit getrennt ausgeführt, kann zum Erreichen einer hohen Empfindlichkeit das Erfassungsmittel in einem Übertragungsbereich des Felderzeugungsmittels angeordnet sein.

Vorzugsweise ist das Felderzeugungsmittel zur induktiven Übertragung der Energie an das Feldempfangsmittel vorgesehen. Dadurch kann ein bestehendes, gängiges Felderzeugungsmittel, z.B. eine Wicklung, zur Energieübertragung eingesetzt werden. Das Felderzeugungsmittel der Primäreinheit und das Feldempfangsmittel der Sekundäreinheit können dabei vorteilhafterweise einen trennbaren Transformator bilden. Es kann bei der Energieübertragung eine Spannung der Primäreinheit in eine Sekundärspannung der Sekundäreinheit unterschiedlichen Werts transformiert werden, wodurch ein zusätzlicher Transformator für die Sekundäreinheit oder einen an die Sekundäreinheit angeschlossenen elektrischen Verbraucher eingespart werden kann. Alternativ kann eine Spannung der Primäreinheit ohne Transformation in der Sekundäreinheit induziert werden. Dabei kann diese Spannung eine Netzspannung (z.B. 220 V oder 230 V) sein.

In einer bevorzugten Ausführungsform der Erfindung wird vorgeschlagen, dass das Erfassungsmittel zur induktiven Erfassung der Sekundärspannungskenngröße vorgesehen ist. Dadurch kann ein besonders kostengünstiges, gängiges Erfassungsmittel eingesetzt werden. Dies ist ferner besonders vorteilhaft, wenn die Energieübertragungseinheit zur induktiven Übertragung der Energie an die Sekundäreinheit vorgesehen ist. Die Sekundärspannungskenngröße ist vorzugsweise als eine Spannung ausgebildet, die im Erfassungsmittel durch den Erfassungsfeldfluss induziert wird. Ist der Erfassungsfeldfluss vom Übertragungsfeldfluss gebildet, kann einfach, mit einer kompakten Bauweise eine Verkettung des Übertragungsfeldflusses mit dem Erfassungsmittel erreicht werden, wenn dem Erfassungsmittel und dem Felderzeugungsmittel ein gemeinsamer ferromagnetischer Kern, wie z.B. ein Eisenkern, zugeordnet ist. In einer alternativen Ausführungsvariante kann das Erfassungsmittel vorteilhaft zur kapazitiven Erfassung der Sekundärspannungskenngröße vorgesehen sein, wobei der Erfassungsfeldfluss vorzugsweise der Fluss eines elektrischen Felds ist. Dies ist besonders vorteilhaft, wenn die Energieübertragungseinheit zur kapazitiven Übertragung der Energie vorgesehen ist, wobei der Übertragungsfeldfluss als elektrischer Feldfluss ausgebildet ist. Hierbei kann die Energieübertragungseinheit zur Energieübertragung an eine als Ladegerät ausgebildete Sekundäreinheit dienen.
Ist das Erfassungsmittel als Wicklung ausgebildet, können vorteilhaft ein geringer Herstellungsaufwand und niedrige Herstellungskosten erzielt werden.

Es wird außerdem vorgeschlagen, dass das Erfassungsmittel das Felderzeugungsmittel umgibt. Dadurch kann eine hohe Empfindlichkeit des Erfassungsmittels erreicht werden.

In einer bevorzugten Ausführung der Erfindung wird vorgeschlagen, dass das Felderzeugungsmittel als Primärwicklung ausgebildet ist, welche in einer Wicklungsebene gewickelt ist, und dass das Erfassungsmittel die Primärwicklung in der Wicklungsebene umschließt. Dadurch kann eine besonders kompakte, Platz sparende Ausgestaltung der Energieübertragungseinheit erreicht werden. Beispielsweise ist die Primärwicklung in der Wicklungsebene als Spiralwicklung ausgebildet. Dadurch kann insbesondere eine hohe Induktivität der Primärwicklung Platz sparend erzielt werden.

Ferner wird vorgeschlagen, dass die Sekundärspannungskenngröße eine Kleinspannung ist, wodurch eine einfache Auswertung der Sekundärspannungskenngröße mittels kostengünstiger, gängiger Auswertemittel erreicht werden kann. Ist das Feldempfangsmittel als Sekundärwicklung ausgebildet, weist hierzu die Wicklung eine Anzahl von Windungen auf, die kleiner als die Windungszahl der Sekundärwicklung ist. Besonders vorteilhaft kann die Wicklung von einer einzigen Windung gebildet sein, wodurch eine besonders kleine, zu einer einfachen Auswertung angepasste Spannung erzeugt werden kann. Unter einer "Kleinspannung" kann in diesem Zusammenhang insbesondere eine Spannung verstanden werden, die höchstens 50 V beträgt.

Vorteilhafterweise dient die Sekundärspannungskenngröße als Regelgröße zum Regeln einer durch den Übertragungsfeldfluss erzeugten Sekundärspannung der Sekundäreinheit. Dadurch kann eine besonders effektive, an einer Anwendung der Sekundäreinheit angepasste Energieübertragung durch die Energieübertragungseinheit erreicht werden. Hierzu ist das Erfassungsmittel vorzugsweise mit einer Steuereinheit der Primäreinheit zum Steuern des Felderzeugungsmittels verbunden. Beispielsweise ist die Steuereinheit als Stromerzeugungseinheit, wie z.B. als Wechselrichter, ausgebildet, die zur Versorgung des Felderzeugungsmittels mit einem Strom dient.

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination.

Es zeigen:
- Fig. 1: eine in einer Arbeitsplatte integrierte Energieübertragungseinheit mit einer Primäreinheit und einen auf der Arbeitsplatte angeordneten elektrischen Topf mit einer Sekundäreinheit,
- Fig. 2: eine schematische Darstellung der Primäreinheit, der Sekundäreinheit und eines Erfassungsmittels und
- Fig. 3: eine Schnittdarstellung der Primäreinheit und der Sekundäreinheit mit Wicklungen und einem Eisenkern.

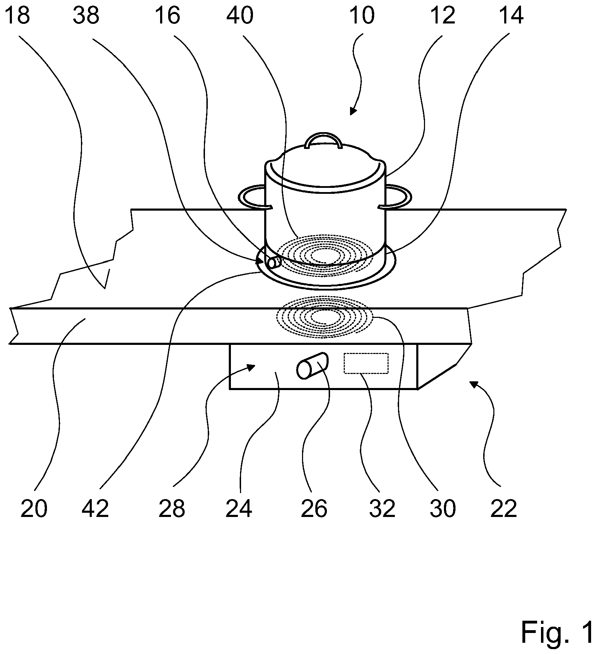

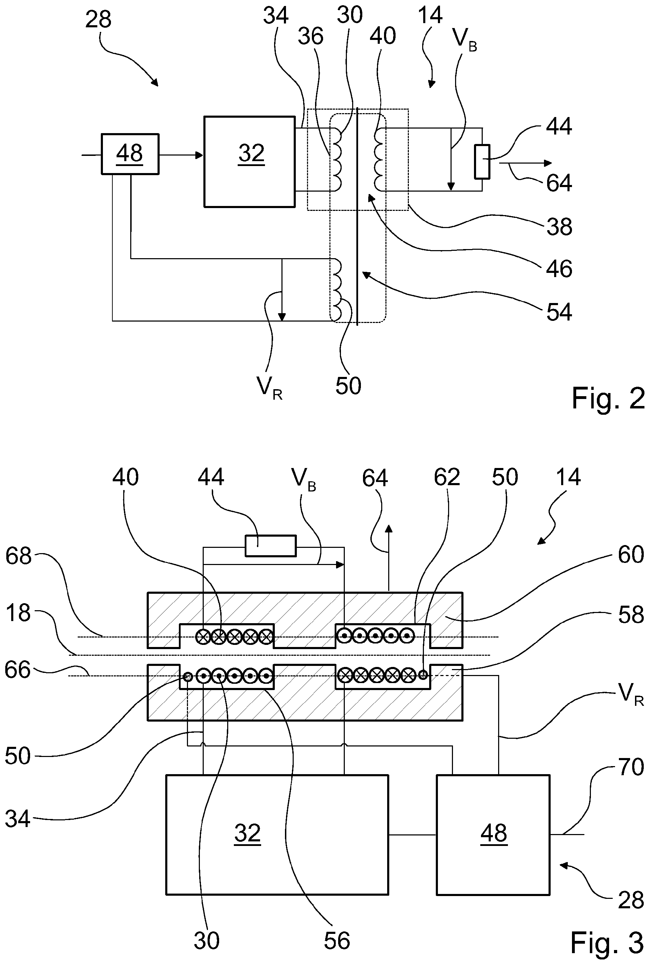

Figur 1 zeigt einen als elektrischen Topf ausgebildeten elektrischen Verbraucher 10. Dieser weist einen Grundkörper 12 mit einem Deckel und Griffen sowie eine als Antriebseinheit ausgebildete Sekundäreinheit 14 mit einem Bedienelement 16 zur Einstellung einer Heiztemperatur auf. Der elektrische Verbraucher 10 ist auf einer Arbeitsfläche 18 einer Arbeitsplatte 20 angeordnet. Unterhalb der Arbeitsfläche 18 ist eine Energieübertragungseinheit 22 in der Arbeitsplatte 20 montiert. Diese weist ein Gehäuse 24 mit einem Betätigungselement 26 zum Ein- und Ausschalten der Energieübertragungseinheit 22 auf. Ferner umfasst die Energieübertragungseinheit 22 eine Primäreinheit 28, welche ein als Primärwicklung ausgebildetes Felderzeugungsmittel 30 und eine Stromerzeugungseinheit 32 zur Versorgung des Felderzeugungsmittels 30 mit einem Wechselstrom 34 aufweist (Figur 2). Die Stromerzeugungseinheit 32 ist in diesem Ausführungsbeispiel als Wechselrichter ausgebildet. Das als Primärwicklung ausgebildete Felderzeugungsmittel 30 ist in Form einer Spiralwicklung gewickelt. Im Betrieb der Energieübertragungseinheit 22 und des elektrischen Verbrauchers 10 wird das Felderzeugungsmittel 30 mit dem Wechselstrom 34 gespeist und erzeugt ein als magnetisches Wechselfeld ausgebildetes Übertragungsfeld. Mittels eines Übertragungsfeldflusses 36 dieses Übertragungsfelds (siehe Figur 2) überträgt das Felderzeugungsmittel 30 durch Induktion Energie an ein in einem auf der Arbeitsfläche 18 gezeichneten Übertragungsbereich 38 angeordnetes Feldempfangsmittel 40, welches Bestandteil der als Antriebseinheit ausgebildeten Sekundäreinheit 14 ist. Das Feldempfangsmittel 40 ist als Sekundärwicklung ausgebildet, die in Form einer Spiralwicklung gewickelt ist. Der Übertragungsbereich 38 ist mittels einer Linie 42 auf der Arbeitsfläche 18 gezeichnet. Im Feldempfangsmittel 40 wird durch den Übertragungsfeldfluss 36 eine Sekundärspannung V_{B} induziert (Figur 2), die als Betriebsspannung für einen Betrieb des elektrischen Verbrauchers 10 genutzt wird. Der elektrische Verbraucher 10 kann nach einer Anwendung vom Übertragungsbereich 38 entfernt und abgestellt werden, wodurch die Sekundäreinheit 14 mit dem Feldempfangsmittel 40 vom Übertragungsbereich 38 getrennt wird. In den Übertragungsbereich 38 können dann weitere elektrische Verbraucher gebracht werden, wie z.B. eine Kaffeemaschine, ein Mixer, ein Ladegerät, eine Friteuse, ein Toaster, ein Wasserkocher usw., die jeweils eine Sekundäreinheit mit einem Feldempfangsmittel aufweisen und von einem drahtlosem Zusammenwirken des jeweiligen Feldempfangsmittels mit der Primäreinheit 28 eine Betriebsenergie beziehen.

In Figur 2 ist eine schematische Darstellung der Primäreinheit 28 und der Sekundäreinheit 14 zu sehen. Zu erkennen sind die als Wechselrichter ausgebildete Stromerzeugungseinheit 32, das Felderzeugungsmittel 30 der Primäreinheit 28 und das Feldempfangsmittel 40 der Sekundäreinheit 14. Der Übertragungsbereich 38 des Felderzeugungsmittels 30 ist durch eine gestrichelte Linie dargestellt. Das Felderzeugungsmittel 30 wird im Betrieb mit dem Wechselstrom 34 durch die Stromerzeugungseinheit 32 gespeist und erzeugt dabei den Übertragungsfeldfluss 36, welcher induktiv die Sekundärspannung V_{B} im als Sekundärwicklung ausgebildeten Feldempfangsmittel 40 erzeugt. Der Übertragungsfeldfluss 36 ist durch eine gestrichelte Linie schematisch dargestellt. Dieser Übertragungsfeldfluss 36 ist ein mit dem Felderzeugungsmittel 30 und dem Feldempfangsmittel 40 verketteter magnetischer Hauptfluss. Neben diesem Hauptfluss kann vom Felderzeugungsmittel 30 und/oder vom Feldempfangsmittel 40 ein Streufluss erzeugt werden, welcher nur mit dem Felderzeugungsmittel 30 bzw. mit dem Feldempfangsmittel 40 verkettet ist und daher zur Energieübertragung zwischen der Primäreinheit 28 und der Sekundäreinheit 14 nicht beiträgt. Die Sekundärspannung V_{B} dient als Betriebsspannung zur Versorgung einer durch einen ohmschen Widerstand schematisch dargestellten Last 44, die in diesem Ausführungsbeispiel als Heizkörper zum Heizen einer im elektrischen Topf angeordneten Speise ausgebildet ist. Das Felderzeugungsmittel 30 der Primäreinheit 28 und das Feldempfangsmittel 40 der Sekundäreinheit 14 bilden jeweils eine Transformatorhälfte eines schematisch dargestellten Transformators 46. Ferner weist die Primäreinheit 28 eine Regelungsvorrichtung 48 auf, die mit der Stromerzeugungseinheit 32 verbunden ist. Diese Regelungsvorrichtung 48 dient dazu, die in der Sekundäreinheit 14 induzierte Sekundärspannung V_{B} zu regeln. Hierzu wird eine Sekundärspannungskenngröße V_{R}, welche von der Sekundärspannung V_{B} abhängt, durch ein Erfassungsmittel 50 der Primäreinheit 28 erfasst. Das Erfassungsmittel 50 ist als Wicklung ausgebildet. Der Übertragungsfeldfluss 36 ist zusätzlich als Erfassungsfeldfluss ausgebildet, welcher zur Erfassung der Sekundärspannungskenngröße V_{R} dient und hierzu mit dem Erfassungsmittel 50 und dem Feldempfangsmittel 40 verkettet ist. Zur Erfassung der Sekundärspannungskenngröße V_{R} nutzt nämlich das Erfassungsmittel 50 den mit dem Felderzeugungsmittel 30 und dem Feldempfangsmittel 40 verketteten Übertragungsfeldfluss 36 aus. Der Übertragungsfeldfluss 36 ist hierbei zusätzlich mit dem Erfassungsmittel 50 verkettet. Die als Spannung ausgeführte Sekundärspannungskenngröße V_{R} ist nach dem bekannten und hier nicht weiter betrachteten Faraday'schen Induktionsgesetz proportional zur Abnahmegeschwindigkeit des Übertragungsfeldflusses 36. Wie in der Figur schematisch dargestellt ist, kann das Erfassungsmittel 50 als eine Transformatorhälfte betrachtet werden, die mit dem Feldempfangsmittel 40 einen Transformator 54 bildet. Die als Spannung ausgebildete Sekundärspannungskenngröße V_{R} weist einen kleineren Spannungswert als die Sekundärspannung V_{B} auf. Die Sekundärspannungskenngröße V_{R} ist eine Kleinspannung, die vorzugsweise einen Wert unter 50 V annimmt.

In Figur 3 sind in einer Schnittdarstellung die Primäreinheit 28, welche die Stromerzeugungseinheit 32, die Regelungsvorrichtung 48 und das als Primärwicklung ausgebildete Felderzeugungsmittel 30 aufweist, die Sekundäreinheit 14 mit dem als Sekundärwicklung ausgeführten Feldempfangsmittel 40 und die Last 44 gezeigt. Das Felderzeugungsmittel 30 ist in einer kreisförmigen Ausnehmung 56 eines Eisenkerns 58 der Primäreinheit 28 angeordnet, welcher dazu dient, eine vom Felderzeugungsmittel 30 erzeugte Feldstärke zu verstärken. Es ist außerdem in der Sekundäreinheit 14 ein weiterer Eisenkern 60 zu sehen, der ebenfalls eine kreisförmige Ausnehmung 62 aufweist, in welcher das Feldempfangsmittel 40 angeordnet ist. Der Eisenkern 60 mit dem Feldempfangsmittel 40 ist vom Eisenkern 58 mit dem Felderzeugungsmittel 30 trennbar, wie durch einen Pfeil 64 schematisch angedeutet wird. Die Arbeitsfläche 18 der Arbeitsplatte 20 ist durch eine gestrichelte Linie schematisch dargestellt. Das als Primärwicklung ausgebildete Felderzeugungsmittel 30 ist in Form einer Spiralspule (siehe auch Figur 1) in einer Wicklungsebene 66 gewickelt. Das Feldempfangsmittel 40 ist ebenfalls in Form einer Spiralspule in einer Wicklungsebene 68 gewickelt. Das Feldempfangsmittel 40 und das Felderzeugungsmittel 30 weisen die gleiche Anzahl von Wicklungen auf. Das Erfassungsmittel 50, welches als Wicklung ausgebildet ist, ist in der Wicklungsebene 66 in der Ausnehmung 56 des Eisenkerns 58 gewickelt. Das Erfassungsmittel 50 weist eine Windung auf, die das Felderzeugungsmittel 30 umschließt. Im Erfassungsmittel 50 wird im Betrieb der Energieübertragungseinheit 22 und des elektrischen Verbrauchers 10, wie oben beschrieben, durch den Übertragungsfeldfluss 36 die Sekundärspannungskenngröße V_{R} erzeugt (Figur 2). Diese Sekundärspannungskenngröße V_{R} kann als eine vom Transformator 54, welcher vom Erfassungsmittel 50 und vom Feldempfangsmittel 40 gebildet ist (Figur 2), heruntertransformierte Spannung betrachtet werden. In diesem Ausführungsbeispiel ist die Sekundärspannung V_{B} um einen Faktor heruntertransformiert, welcher durch die Anzahl der Windungen des Feldempfangsmittels 40 gegeben ist. Die Sekundärspannungskenngröße V_{R} wird auf die Regelungsvorrichtung 48 gegeben, wo sie mit einem Sollwert 70 verglichen wird. Der Sollwert 70 stellt einen vorgegebenen Spannungswert dar, der einem gewünschten Wert der Sekundärspannung V_{B} entspricht. Weicht die Sekundärspannungskenngröße V_{R} vom Sollwert 70 ab, so wird der in das Felderzeugungsmittel 30 eingespeiste Wechselstrom 34 durch die Stromerzeugungseinheit 32 variiert, bis die Sekundärspannungskenngröße V_{R} den gewünschten Sollwert 70 annimmt.

**Bezugszeichen**

| | | | |
|---|---|---|---|
| 10 | Verbraucher | 64 | Pfeil |
| 12 | Grundkörper | 66 | Wicklungsebene |
| 14 | Sekundäreinheit | 68 | Wicklungsebene |
| 16 | Bedienelement | 70 | Sollwert |
| 18 | Arbeitsfläche | V_{B} | Sekundärspannung |
| 20 | Arbeitsplatte | V_{R} | Sekundärspannungskenngröße |
| 22 | Energieübertragungseinheit | | |
| 24 | Gehäuse | | |
| 26 | Betätigungselement | | |
| 28 | Primäreinheit | | |
| 30 | Felderzeugungsmittel | | |
| 32 | Stromerzeugungseinheit | | |
| 34 | Wechselstrom | | |
| 36 | Übertragungsfeldfluss | | |
| 38 | Übertragungsbereich | | |
| 40 | Feldempfangsmittel | | |
| 42 | Linie | | |
| 44 | Last | | |
| 46 | Transformator | | |
| 48 | Regelungsvorrichtung | | |
| 50 | Erfassungsmittel | | |
| 54 | Transformator | | |
| 56 | Ausnehmung | | |
| 58 | Eisenkern | | |
| 60 | Eisenkern | | |
| 62 | Ausnehmung | | |

## Patentansprüche

1. Energieübertragungseinheit umfassend eine Primäreinheit (28), die ein Felderzeugungsmittel (30) aufweist, das zur Übertragung einer Energie an ein Feldempfangsmittel (40) einer Sekundäreinheit (14) mittels eines Übertragungsfeldflusses (36) vorgesehen ist, und ein Erfassungsmittel (50) zur Erfassung einer Sekundärspannungskenngröße (V_{R}), wobei das Erfassungsmittel (50) zur Erfassung der Sekundärspannungskenngröße (V_{R}) mittels eines mit zumindest dem Erfassungsmittel (50) und dem Feldempfangsmittel (40) verketteten Erfassungsfeldflusses vorgesehen ist, **dadurch gekennzeichnet, dass** die Sekundärspannungskenngröße (V_{R}) als Regelgröße zum Regeln einer durch den Übertragungsfeldfluss (36) erzeugten Sekundärspannung (V_{B}) der Sekundäreinheit (14) dient, wobei der Erfassungsfeldfluss der Übertragungsfeldfluss (36) ist und wobei das Erfassungsmittel (50) in der Primäreinheit (28) angeordnet ist.

2. Energieübertragungseinheit nach einem der vorhergehenden Ansprüche, **dadurch gekennzeichnet, dass** das Felderzeugungsmittel (30) zur induktiven Übertragung der Energie an das Feldempfangsmittel (40) vorgesehen ist.

3. Energieübertragungseinheit nach einem der vorhergehenden Ansprüche, **dadurch gekennzeichnet, dass** das Erfassungsmittel (50) zur induktiven Erfassung der Sekundärspannungskenngröße (V_{R}) vorgesehen ist.

4. Energieübertragungseinheit nach Anspruch 3 **dadurch gekennzeichnet, dass** das Erfassungsmittel (50) als Wicklung ausgebildet ist.

5. Energieübertragungseinheit nach einem der vorhergehenden Ansprüche, **dadurch gekennzeichnet, dass** das Erfassungsmittel (50) das Felderzeugungsmittel (30) umgibt.

6. Energieübertragungseinheit nach einem der vorhergehenden Ansprüche, **dadurch gekennzeichnet, dass** das Felderzeugungsmittel (30) als Primärwicklung ausgebildet ist, welche in einer Wicklungsebene (66) gewickelt ist, und dass das Erfassungsmittel (50) die Primärwicklung in der Wicklungsebene (66) umschließt.

7. Energieübertragungseinheit nach einem der vorhergehenden Ansprüche, **dadurch gekennzeichnet, dass** die Sekundärspannungskenngröße (V_{R}) eine Kleinspannung ist.

## Claims

1. Energy transmission unit comprising a primary unit (28), which has a field generating means (30) provided for transmitting energy to a field receiving means (40) of a secondary unit (14) by means of a transmission field flux (36), and a detecting means (50) for detecting a secondary voltage parameter (V_{R}), wherein the detecting means (50) is provided for detecting the secondary voltage parameter (V_{R}) by means of a detecting field flux linked with at least the detecting means (50) and the field receiving means (40), **characterised in that** the secondary voltage parameter (V_{R}) serves as a controlled variable for controlling a secondary voltage (V_{B}) of the secondary unit (14) generated by the transmission field flux (36), wherein the detecting field flux is the transmission field flux (36) and wherein the detecting means (50) is arranged in the primary unit (28).

2. Energy transmission unit according to one of the preceding claims, **characterised in that** the field generating means (30) is provided for inductively transmitting the energy to the field receiving means (40).

3. Energy transmission unit according to one of the preceding claims, **characterised in that** the detecting means (50) is provided for inductively detecting the secondary voltage parameter (V_{R}).

4. Energy transmission unit according to claim 3, **characterised in that** the detecting means (50) is embodied as a winding.

5. Energy transmission unit according to one of the preceding claims, **characterised in that** the detecting means (50) surrounds the field generating means (30).

6. Energy transmission unit according to one of the preceding claims, **characterised in that** the field generating means (30) is embodied as a primary winding, which is wound in a winding plane (66), and that the detecting means (50) encompasses the primary winding in the winding plane (66).

7. Energy transmission unit according to one of the preceding claims, **characterised in that** the secondary voltage parameter (V_{R}) is a low voltage.

## Revendications

1. Unité de transmission d'énergie comprenant une unité primaire (28) présentant un moyen de production de champ (30) prévu pour la transmission d'une énergie sur le moyen récepteur de champ (40) d'une unité secondaire (14) au moyen d'un flux de champ de transmission (36), et un moyen de détection (50) pour la détection d'une caractéristique de tension secondaire (V_{R}), ce moyen de détection (50) étant prévu pour la détection de la caractéristique de tension secondaire (V_{R}) au moyen d'un flux de champ de détection relié à au moins le moyen de détection (50) et au moyen récepteur de champ (40), **caractérisée en ce que** cette caractéristique de tension secondaire (V_{R}) sert de grandeur de réglage pour le réglage d'une tension secondaire (V_{B}) de l'unité secondaire (14) produite par le flux de champ de transmission (36),
ce flux de champ de détection étant le flux de champ de transmission (36),
et
le moyen de détection (50) étant disposé dans l'unité primaire (28).

2. Unité de transmission d'énergie selon l'une des revendications précédentes, **caractérisée en ce que** le moyen de production de champ (30) est prévu pour la transmission par induction de l'énergie sur le moyen récepteur de champ (40).

3. Unité de transmission d'énergie selon l'une des revendications précédentes, **caractérisée en ce que** le moyen de détection (50) est prévu pour la détection par induction de la caractéristique de tension secondaire (V_{R}).

4. Unité de transmission d'énergie selon la revendication 3, **caractérisée en ce que** le moyen de détection (50) est réalisé sous forme d'enroulement.

5. Unité de transmission d'énergie selon l'une des revendications précédentes, **caractérisée en ce que** le moyen de détection (50) entoure le moyen de production de champ (30).

6. Unité de transmission d'énergie selon l'une des revendications précédentes, **caractérisée en ce que** le moyen de production de champ (30) est réalisé sous forme d'enroulement primaire, lequel est enroulé dans un plan d'enroulement (66) et **en ce que** le moyen de détection (50) enferme l'enroulement primaire dans le plan d'enroulement (66).

7. Unité de transmission d'énergie selon l'une des revendications précédentes, **caractérisée en ce que** la caractéristique de tension secondaire (V_{R}) est une tension inférieure.
